# FASCICULE DE BREVET EUROPEEN

(11) **EP 2 032 750 B1**
(45) Date de publication et mention de la délivrance du brevet: **24.03.2010**
(21) Numéro de dépôt: 07803901.3
(22) Date de dépôt: 20.06.2007
(51) Int. Cl.: D03D 25/00, D03D 11/00, D03D 15/00, B29C 70/00, C08J 5/00, B32B 27/04

(54) **STRUCTURE FIBREUSE DE RENFORT POUR LA RÉALISATION DE PIÈCE EN MATÉRIAU COMPOSITE**
FASERIGE VERSTÄRKUNGSSTRUKTUR ZUR HERSTELLUNG EINES VERBUNDSTOFFTEILS
FIBROUS REINFORCEMENT STRUCTURE FOR PRODUCING A COMPOSITE PART

(30) Priorité: 21.06.2006 FR 0652572
(43) Date de publication de la demande: 11.03.2009
(73) Titulaire: Snecma Propulsion Solide, 33187 Le Haillan Cedex (FR)
(72) Inventeur: BOUILLON, Eric, F-33185 Le Haillan (FR); CHARLEUX, François, F-33000 Bordeaux (FR); LOUCHET-POUILLERIE, Caroline, F-33460 Arsac (FR); BOUVIER, Rémi, F-33700 Merignac (FR); COUPE, Dominique, F-33185 Le Haillan (FR)
(74) Mandataire: Joly, Jean-Jacques
(86) Numéro de dépôt international: PCT/FR2007/051476
(87) Numéro de publication internationale: WO 2007/148018

(56) Documents cités:
- EP-A- 0 439 274
- JP-A- 10 338 008
- JP-A- 2005 305 276
- US-A- 4 922 969
- US-A- 5 490 602
- US-A1- 2002 090 873
- US-A1- 2003 228 815

## Description

### Arrière-plan de l'invention

L'invention concerne la réalisation de pièces en matériau composite et plus particulièrement la réalisation de structures fibreuses de renfort pour de telles pièces.

Un domaine d'application de l'invention est plus particulièrement la réalisation de pièces en matériau composite thermostructural, c'est-à-dire en un matériau ayant des propriétés mécaniques qui le rendent apte à constituer des éléments de structures et ayant la capacité de conserver ces propriétés à des températures élevées. Des matériaux composites thermostructuraux sont typiquement les matériaux composites carbone/carbone (C/C) ayant un renfort fibreux en carbone densifié par une matrice en carbone, et les matériaux composites à matrice céramique (CMC) ayant un renfort fibreux réfractaire (carbone ou céramique) densifié par une matrice céramique. Des pièces en matériau composite thermostructural sont utilisées notamment dans les domaines aéronautique et spatial.

Pour des pièces en matériau composite présentant une certaine épaisseur, il est courant de réaliser la structure de renfort en plusieurs couches superposées liées entre elles pour éviter une décohésion entre couches, notamment par tissage tridimensionnel.

Par ailleurs, en particulier dans le cas où la pièce en matériau composite est obtenue par densification de la structure fibreuse de renfort par infiltration chimique en phase gazeuse (ou CVI, pour "Chemical Vapor Infiltration"), il peut être utile de ménager un accès aisé à la phase gazeuse jusqu'au coeur de la structure fibreuse ou de faire en sorte que celle-ci présente une porosité relativement uniforme pour réaliser une densification aussi peu inhomogène que possible. En effet, en cas de difficultés d'accès au sein de la porosité de la structure fibreuse, ou en présence de pores de tailles très différentes, les pores les plus petits étant obturés plus rapidement, un fort gradient de densification est inévitable qui affecte les propriétés du matériau composite.

Il a été proposé dans le document EP 0 489 637 d'utiliser pour l'élaboration d'une structure fibreuse de renfort de pièce en matériau composite thermostructural un fil formé de fibres discontinues sensiblement sans torsion, la cohésion du fil étant assurée par un fil de guipage. La structure peut être réalisée par tissage tridimensionnel. Le fil de guipage est en matériau fugace ou fugitif qui est éliminé après tissage, autorisant un foisonnement des filaments discontinus, ce qui favorise le fractionnement de la porosité de la structure tissée et, en combinaison avec le tissage tridimensionnel, favorise l'accès de la phase gazeuse au coeur de la structure fibreuse lors d'une densification ultérieure par CVI.

On connaît du document US4922969 une structure fibreuse appropriée à la fabrication d'une pièce en matériau composite, tissée en une seule pièce et ayant une partie interne, ou coeur, réalisé par tissage tridimensionnel et une partie adjacente à une surface extérieure, ou peau.

Toutefois, dans le cas de la fabrication de pièces en matériau composite devant présenter un état de surface assez lisse, un arasage de la surface est nécessaire après un premier stade de densification partielle, ou stade de consolidation, pour éliminer les irrégularités créées par le foisonnement à la surface des filaments discontinus libérés après l'élimination du fil de guipage. L'ajout à la surface d'une strate de tissu bidimensionnel peut en outre être nécessaire avant poursuite de la densification afin d'obtenir un état de surface souhaité.

### Objet et résumé de l'invention

L'invention a pour but de remédier aux inconvénients que représentent de telles opérations supplémentaires et, plus généralement vise à proposer une structure fibreuse destinée à constituer un renfort pour une pièce en matériau composite et répondant à des contraintes d'infiltrabilité aisée par une phase gazeuse lors d'une densification CVI et des contraintes d'aspect et/ou de propriétés particulières souhaités pour la pièce réalisée.

Ce but est atteint avec une structure fibreuse de renfort de pièce en matériau composite, ladite structure fibreuse étant tissée en une seule pièce et ayant une partie interne, ou coeur, et une partie adjacente à une surface extérieure, ou peau, structure dans laquelle le coeur est réalisé par tissage tridimensionnel avec des fils au moins majoritairement formés de fibres discontinues et la peau est réalisée par tissage avec des fils formés de filaments continus.

Ainsi, une densification de la structure fibreuse par CVI est favorisée à coeur, évitant un fort gradient de densification entre coeur et peau, tandis qu'en peau un état de surface exempt de fortes irrégularités est préservé.

Selon un mode de réalisation, le coeur est réalisé par tissage interlock qui ménage un accès plus aisé à la phase gazeuse au coeur de la préforme, tandis que la peau est réalisée par tissage avec une armure de type toile, satin ou sergé, ce qui permet de limiter les irrégularités de surface. Le tissage de la peau peut comprendre un tissage 2D, auquel cas le tissage interlock assure la liaison de couches de trame entre elles jusque dans la peau, ou un tissage 3D multicouches.

Selon un autre mode de réalisation, le coeur et la peau pourront être réalisés par tissage 3D multicouches avec des armures différentes, par exemple une armure de type satin dans la partie de coeur et une armure de type toile ou sergé dans la partie de peau. Une armure de type toile en peau permet un accès plus aisé aux gaz à travers la peau en comparaison avec une armure de type satin et favorise donc une densification par CVI à coeur.

Selon encore un autre mode de réalisation, la peau est réalisée avec une contexture plus faible que celle avec laquelle le coeur est réalisé, ce qui ménage alors un accès plus aisé à la phase gazeuse à travers la peau vers le coeur de la préforme.

On pourra faire varier à la fois le mode de tissage 3D et la contexture entre coeur et peau.

On pourra en outre former les parties différentes de la structure fibreuse avec des fils de natures chimiques différentes afin de leur conférer des propriétés particulières souhaitées, notamment de résistance à l'usure ou à l'oxydation.

Le tissage de la partie de coeur peut être réalisé avec des fils qui sont formés de fibres discontinues sensiblement sans torsion et d'au moins un fil de guipage fugitif assurant la cohésion des fils.

L'invention vise aussi une pièce en matériau composite ayant une structure fibreuse de renfort telle que définie ci-avant densifiée par une matrice.

### Brève description des dessins

L'invention sera mieux comprise à la lecture de la description faite ci-après en référence aux dessins annexés sur lesquels :
- les figures 1 à 3 illustrent des armures de tissage tridimensionnel interlock et multicouches ;
- les figures 4A à 4H représentent différents plans successifs d'armure d'une structure fibreuse de renfort selon un premier mode de réalisation de l'invention ;
- les figures 5A à 5H représentent différents plans successifs d'armure d'une structure fibreuse de renfort selon un deuxième mode de réalisation de l'invention ;
- les figures 6A à 6H représentent différents plans successifs d'armure d'une structure fibreuse de renfort selon un troisième mode de réalisation de l'invention ; et
- les figures 7A à 7L représentent différents plans successifs d'armure d'une structure fibreuse de renfort selon un quatrième mode de réalisation de l'invention.

### Définitions

Par "filaments continus", on entend ici de façon conventionnelle des éléments fibreux ayant une très grande longueur par rapport à leur diamètre. Ainsi, dans le cas par exemple d'une structure de renfort constituant une préforme d'une pièce en matériau composite et réalisée à partir de filaments continus, au moins une très grande majorité de ceux-ci s'étendent continûment dans la préforme en étant interrompus seulement aux limites géométriques de la préforme. Dans le cas de filaments continus non naturels, ils sont habituellement obtenus par filage d'une matière synthétique suivi éventuellement d'une ou plusieurs opération(s) physico-chimique(s) (étirage, ensimage, traitement thermique, ...).

Des fils constitués de filaments continus, ou multifilaments, sont formés en assemblant des filaments continus côte à côte avec ou sans torsion.

Par "fibres discontinues" on entend ici de façon conventionnelle des éléments fibreux qui, dans le cas de fibres non naturelles, sont formés par coupe ou étirage-craquage de filaments continus. Des fibres discontinues ou fibres courtes ont une longueur habituellement de quelques millimètres à quelques dizaines de millimètres.

Des fils constitués de fibres discontinues, ou filés de fibres, sont formés en assemblant les fibres discontinues par retorsion ou par guipage, le guipage consistant à conférer une cohésion par enroulement d'un fil de guipage autour d'un ensemble de fibres discontinues qui peuvent être non retordues ou faiblement retordues.

Par "tissage bidimensionnel" ou "tissage 2D", on entend ici un mode de tissage classique par lequel chaque fil de chaîne passe d'un côté à l'autre de fils d'une seule couche de trame.

Par "tissage tridimensionnel" ou "tissage 3D", on entend ici un mode de tissage par lequel certains au moins des fils de chaîne lient des fils de trame sur plusieurs couches de trame.

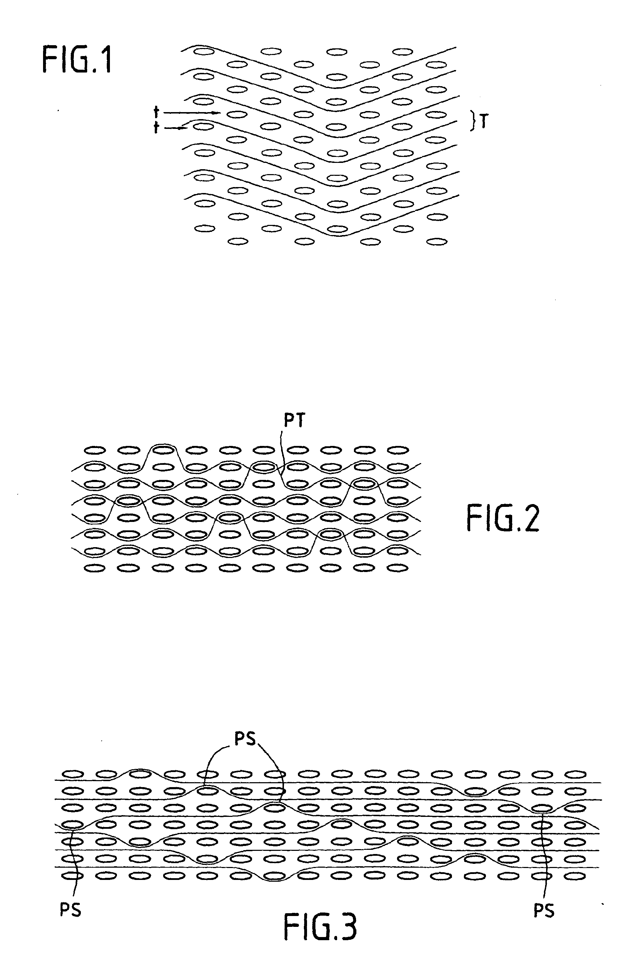

Par "tissage interlock", on entend ici une armure de tissage 3D dont chaque couche de chaîne lie plusieurs couches de trames avec tous les fils de la même colonne de chaîne ayant le même mouvement dans le plan de l'armure. La figure 1 est une vue d'un de 8 plans d'une armure interlock à 7 couches de chaîne et 8 couches de trame. Dans l'armure interlock illustrée, une couche de trame T est formée de deux demi-couches de trame t adjacentes décalées l'une par rapport à l'autre dans le sens chaîne. On a donc 16 demi-couches de trame positionnées en quinconce. Chaque chaîne lie 3 demi-couches de trame. Dans ce qui suit, le terme "couche" pourra être utilisé pour désigner une couche complète ou une demi-couche de fils de trame, sauf indication contraire.

On pourrait aussi adopter une disposition en trame non en quinconce, les fils de trame de deux couches de trame voisines étant alignés sur des mêmes colonnes.

Par "tissage multicouches", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles. La figure 2 montre un plan de tissu multicouches de type toile, ou "tissu multi-toile" dans lequel des fils de chaîne sont de temps en temps déviés de leur trajet de toile 2D classique associé à une trame pour saisir un fil d'une trame voisine et former des points de toile particuliers PT liant deux couches de trame voisines. Au niveau d'un point de toile particulier PT, le fil de chaîne passe autour de deux fils de trame situés sur une même colonne dans deux couches de trame voisines.

La figure 3 montre un plan d'un tissu multicouches de type satin, ou "tissu multi-satin", dans laquelle chaque fil de chaîne est dévié alternativement dans un sens et dans l'autre pour saisir alternativement un fil de trame sur n d'une première couche de fils de trame et un fil de trame sur n d'une deuxième couche de fils de trame adjacente à la première, n étant un nombre entier supérieur à 2, réalisant ainsi une liaison entre deux couches par des points de satin PS. Dans l'exemple illustré, n = 16.

Dans une armure de type satin, le "pas" désigne l'intervalle entre deux points de satin d'un même fil de chaîne mesuré en nombre de colonnes de trame. Dans le cas de la figure 3, un tel pas est alternativement de 6 et de 10, donnant un pas de multi-satin moyen de 8, soit n/2.

Dans les armures des figures 2 et 3, les fils de trame ne sont pas disposés en quinconce, les fils de trame de deux couches voisines de fils de trame étant alignés sur des mêmes colonnes. On pourra toutefois avoir une disposition trame en quinconce comme dans le cas de la figure 1, les liaisons étant réalisées entre deux demi-couches de trame voisines.

On notera qu'une liaison par un même fil de chaîne dans une armure multi-toile ou multi-satin n'est pas limitée à deux couches de trame voisines mais peut s'étendre sur une profondeur de plus de deux couches de trame.

Par "contexture", on désigne ici le nombre de fils par unité de longueur en sens trame et en sens chaîne, une contexture faible (ou lâche) signifiant un moins grand nombre de fils, donc un tissu plus ouvert par opposition avec une contexture élevée (ou serrée).

Dans tout le texte qui suit et dans tous les dessins, il est mentionné et représenté par convention et souci de commodité, que ce sont les fils de chaîne qui sont déviés de leurs trajets pour saisir des fils de trame d'une couche de trame ou de plusieurs couches de trames. Toutefois, une inversion des rôlès entre chaîne et trame est possible, et doit être considérée comme couverte aussi par les revendications.

### Rescription détaillée de modes de réalisation de l'invention

Le domaine d'application de l'invention est celui de la réalisation de textures fibreuses épaisses aptes à constituer des renforts fibreux, ou préformes, pour la fabrication de pièces en matériau composite.

La réalisation de la texture fibreuse par tissage 3D permet d'obtenir une liaison entre les couches, donc d'avoir une bonne tenue mécanique de la texture fibreuse et de la pièce en matériau composite obtenue, en une seule opération textile.

Lorsque la pièce est obtenue par densification de la texture fibreuse au moins en partie par infiltration chimique en phase gazeuse (CVI), il est avantageux, pour obtenir des propriétés mécaniques aussi peu inhomogènes que possible au sein de la pièce, de favoriser une densification avec un gradient de densification aussi faible que possible entre une partie interne ou coeur de la texture fibreuse et une partie externe ou peau de celle-ci, c'est-à-dire une partie de la texture fibreuse adjacente à une surface extérieure.

A cet effet, et pour favoriser l'accès de la phase gazeuse réactionnelle au coeur de la préforme lors d'un processus CVI, le tissage de la partie de coeur est réalisé avec des fils au moins majoritairement formés de fibres discontinues permettant un fractionnement de la porosité par foisonnement des fibres. On pourra utiliser des fils formés de fibres discontinues sans torsion ou avec très peu de torsion et d'un fil de guipage fugitif conférant la cohésion aux fils, les fibres discontinues formant la majorité des fils même lorsque le fil de guipage est formé de filaments continus. On peut aussi utiliser des fils formés de fibres discontinues retordues ou filés de fibres discontinues.

Il est avantageux encore de favoriser l'obtention, après densification, d'un état de surface exempt d'irrégularités, c'est-à-dire un bon état de finition pour éviter ou limiter des opérations de finition par usinage.

A cet effet, la peau est réalisée par tissage avec des fils formés de filaments continus pour éviter un foisonnement de fibres discontinues. Cela vaut pour la couche de fils de trame définissant la partie externe de la peau et éventuellement une ou plusieurs couches de fils de trame adjacentes. Cela vaut aussi de préférence pour les fils de chaîne qui affleurent à la surface de la peau.

Selon un mode de réalisation de l'invention, le coeur est réalisé par tissage tridimensionnel de type interlock et la peau est réalisée par tissage avec armure de type toile, satin ou sergé. Le tissage interlock à coeur favorise l'accès de la phase gazeuse lors d'un processus CVI car il offre une communication aisée entre plusieurs couches de tissu. Le tissage de la peau peut comprendre un tissage bidimensionnel avec armure toile, satin ou sergé, le tissage interlock de la partie de coeur s'étendant alors jusqu'à la partie de peau, ou peut comprendre un tissage multicouches avec armure de type toile, satin ou sergé.

Selon un autre mode de réalisation, le coeur et la peau sont réalisés par tissage multicouches avec des armures différentes. Le coeur peut être réalisé par tissage multicouches avec armure de type satin et la peau par tissage multicouches avec armure de type toile ou sergé.

Encore dans le but de favoriser l'accès de la phase gazeuse réactionnelle, la peau peut être réalisée avec une contexture plus faible que celle à coeur.

Il peut être souhaitable en outre d'utiliser des fils de natures chimiques différentes entre le coeur et la peau pour conférer des propriétés particulières à la pièce en matériau composite obtenue, notamment en termes de résistance à l'oxydation ou à l'usure.

Ainsi, dans le cas d'une pièce en matériau composite thermostructural à renfort en fibres réfractaires, on pourra réaliser une préforme avec des fibres carbone dans le coeur et des fibres en céramique, par exemple en carbure de silicium (SiC), dans une peau afin d'accroître la résistance à l'usure de la pièce composite au niveau de cette peau.

Des exemples de réalisation d'une structure fibreuse conformément à l'invention seront maintenant décrits. Dans tous ces exemples, le tissage est réalisé sur un métier de type Jacquard.

### Exemple 1

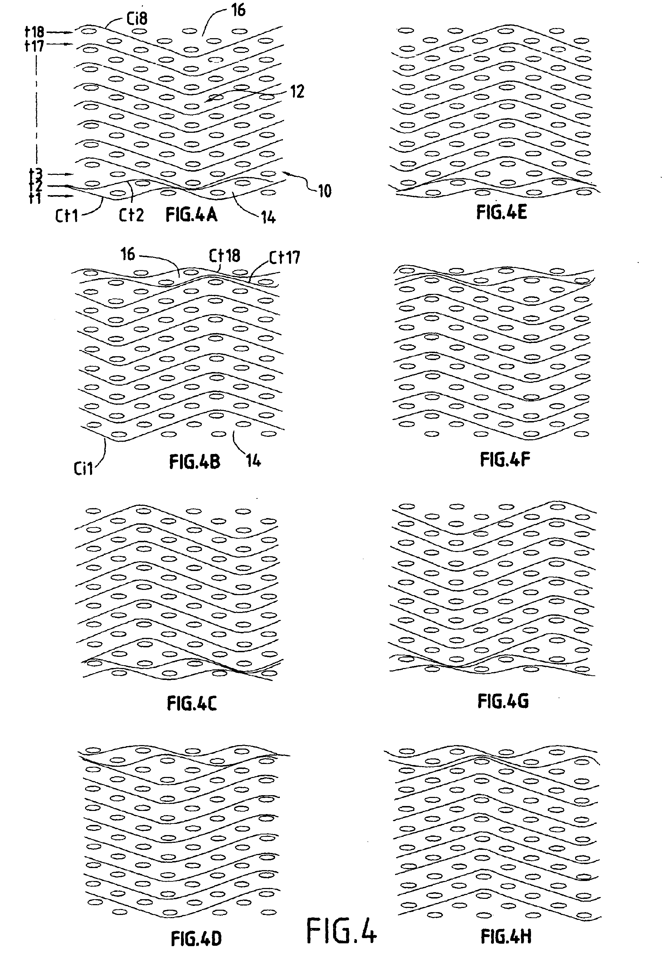

Les figures 4A à 4H représentent partiellement 8 plans successifs d'une armure d'une structure fibreuse obtenue par tissage 3D, les fils de trame étant visibles en coupe.

La structure fibreuse 10 comprend 9 couches de fils de trame, soit 18 demi-couches t1 à t18. Dans le coeur 12 situé entre des peaux opposées 14, 16, le tissage 3D est de type interlock avec des fils formés majoritairement de fibres de carbone discontinues maintenues par un fil de guipage en matériau fugitif, comme décrit dans EP 0 489 637, et avec une contexture 10/10 par couche (10 fils par cm en trame et en chaîne). Le fil de guipage est par exemple en un polymère soluble tel qu'un alcool polyvinylique ou un polymère éliminable par traitement thermique sans affecter le carbone des fibres, tel qu'un polyéthylène ou acétate de polyvinyle. Dans les peaux 14, 16, le tissage est bidimensionnel à armure de type toile avec des fils formés de filaments de carbone continus et avec une contexture 5/5 par couche. La liaison par tissage à armure toile ne concerne que les demi-couches t1 et t2 et les demi-couches t17 et t18 de fils de trame. On notera que le tissage 3D interlock du coeur s'étend jusqu'aux demi-couches de trame t1, t18 des peaux afin de lier ces demi-couches à celles du coeur.

Dans cet exemple, les fils formés de filaments continus sont les fils des demi-couches de fils de trame t1, t2, t17, t18 ainsi que les fils de chaîne des armures toile en surface, c'est-à-dire les fils de chaîne Ct1, CtZ ainsi que les fils de chaîne Ct17, Ct18 des figures 4A et 4B. Les fils de chaîne du tissage interlock venant prendre des fils des demi-couches t1 et t18 et venant donc affleurer à la surface de la peau pourront aussi être formés de filaments continus (fils de chaîne Ci1 et Ci8 des figures 4B et 4A).

Dans cet exemple, outre le type de fil, le mode de tissage 3D et la contexture varient entre coeur et peau. Le tissage 3D interlock et l'utilisation de fils formés de fibres discontinues à coeur sont favorables pour minimiser un gradient de densification par CVI entre peaux et coeur. Un tissage à armure toile et l'utilisation de fils formés de filaments continus en peau sont favorables pour obtenir un état de surface relativement lisse, et une armure toile et une contexture plus faible dans les peaux favorisent l'accès d'une phase gazeuse réactionnelle à travers les peaux.

### Exemple 2

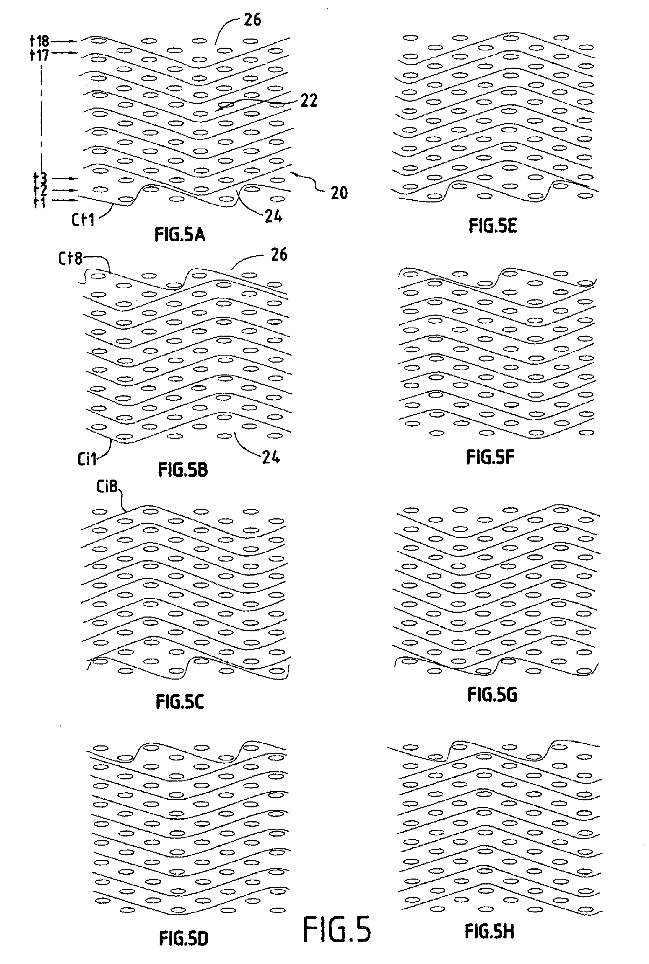

Les figures 5A à 5H représentent partiellement des plans successifs d'une structure fibreuse 20 obtenue par tissage 3D, cette structure différant de celle de l'Exemple 1 en ce que l'on réalise dans les peaux 24, 26 un tissage multicouches avec armure analogue à une armure multi-toile sur une épaisseur de 2 demi-couches de trame, le tissage 3D dans la partie de coeur 22 étant de type interlock avec chaque chaîne s'étendant sur une profondeur de 3 demi-couches de fils de trame, les fils de trame étant disposés en quinconce.

Dès lors qu'un tissage multicouches est réalisé dans les peaux, il n'est pas nécessaire que le tissage interlock engloble toutes les couches de trame de la peau. Il peut être suffisant qu'une couche ou demi-couche de trame située à l'interface entre coeur et peau soit concernée à la fois par le tissage interlock et le tissage multicouches pour obtenir une liaison par tissage 3D de toutes les couches de trame. Toutefois, dans l'exemple illustré, le tissage interlock engloble toutes les demi-couches de fils de trame.

Comme dans l'Exemple 1, le tissage à coeur est réalisé avec des fils formés de fibres discontinues réunies par un fil de guipage fugitif et le tissage en peau est réalisé avec des fils formés de filaments continus. Ainsi, par exemple, dans le mode de réalisation illustré par les figures 5A à 5H, les fils formés de filaments continus sont les fils des demi-couches de fils de trame t1, t2, t17, t18 ainsi que les fils de chaîne du tissage multi-toile et du tissage interlock venant prendre des fils des demi-couches t1, t18 (fils de chaîne Ct1, Ct8, Ci1, Ci8 sur les figures 5B et 5C).

### Exemple 3

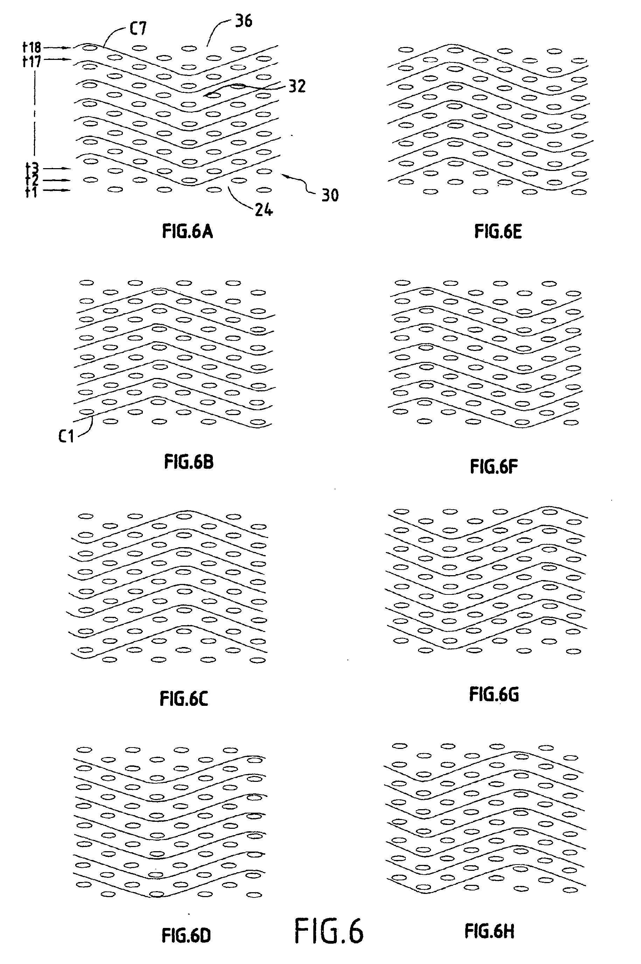

Les figures 6A à 6H représentent partiellement des plans de trame successifs d'une structure 30 obtenue par tissage multicouche tridimensionnel, cette structure différant de celle de l'Exemple 1 en ce qu'un même tissage 3D interlock est réalisé dans le coeur 32 et les peaux 34, 36.

A coeur 32, le tissage est réalisé avec des fils formés de fibres discontinues réunies par un fil de guipage fugitif tandis qu'en peau 34, 36, c'est-à-dire sur une ou deux demi-couches extrêmes de trame, le tissage est réalisé avec des fils formés de filaments continus. Dans l'exemple illustré, les fils formés de filaments continus sont les fils des demi-couches de fils de trame t1, t2, t17, t18 ainsi que les fils de chaîne venant prendre des fils des demi-couches t1, t18 (fils de chaîne C1 et C7 des figures 6B et 6A).

Dans cet exemple, seul le type de fil varie entre coeur et peau.

### Exemple 4

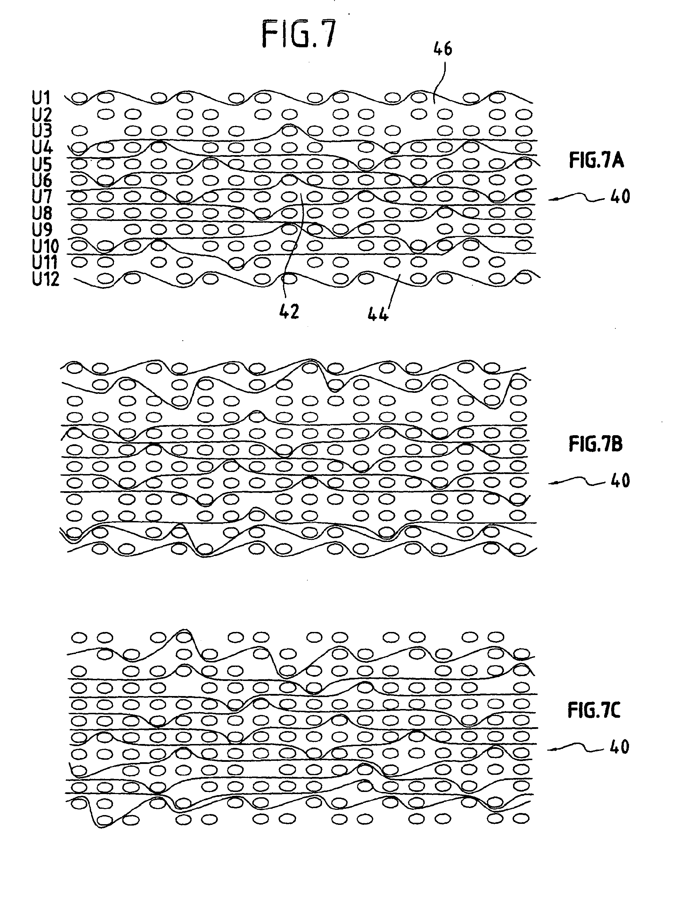

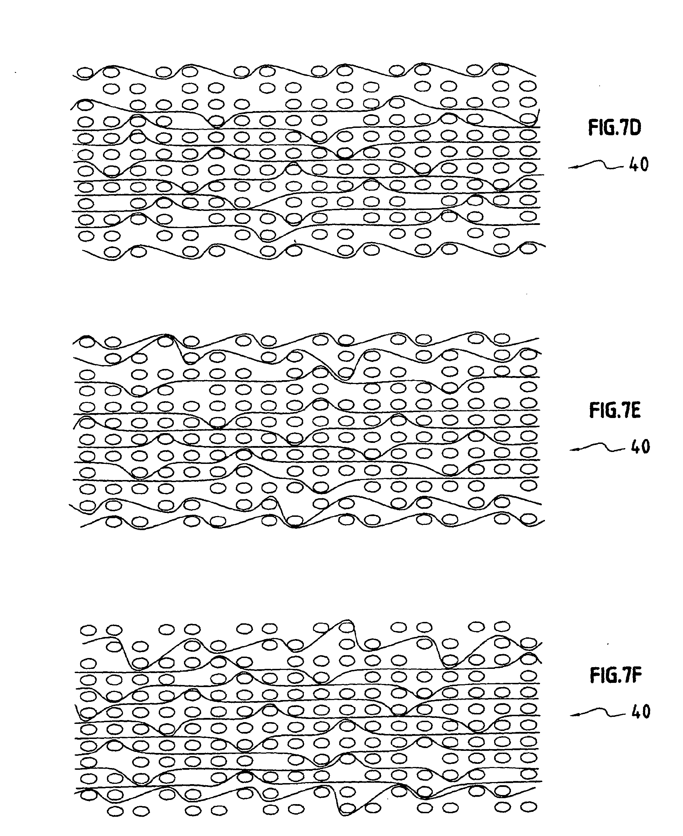

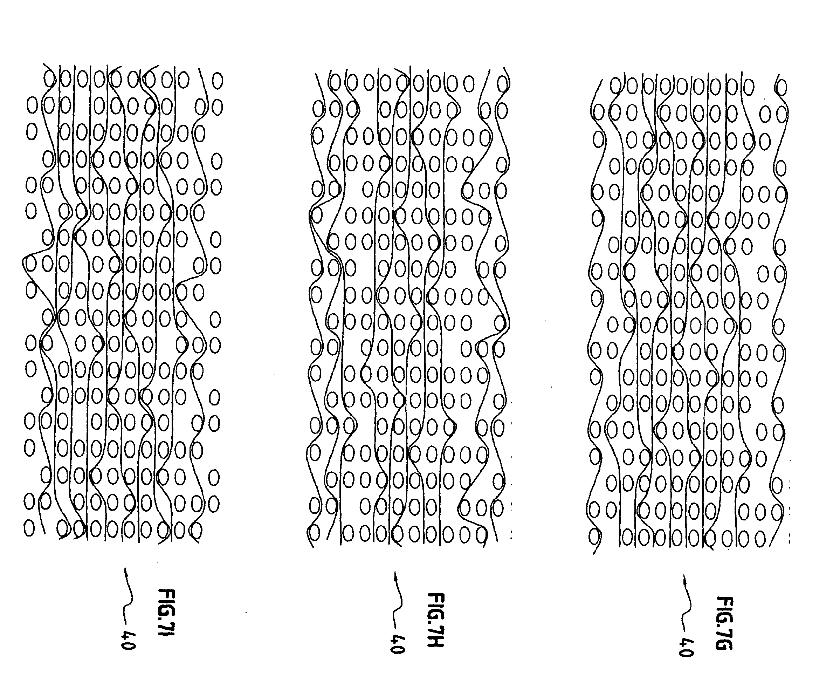

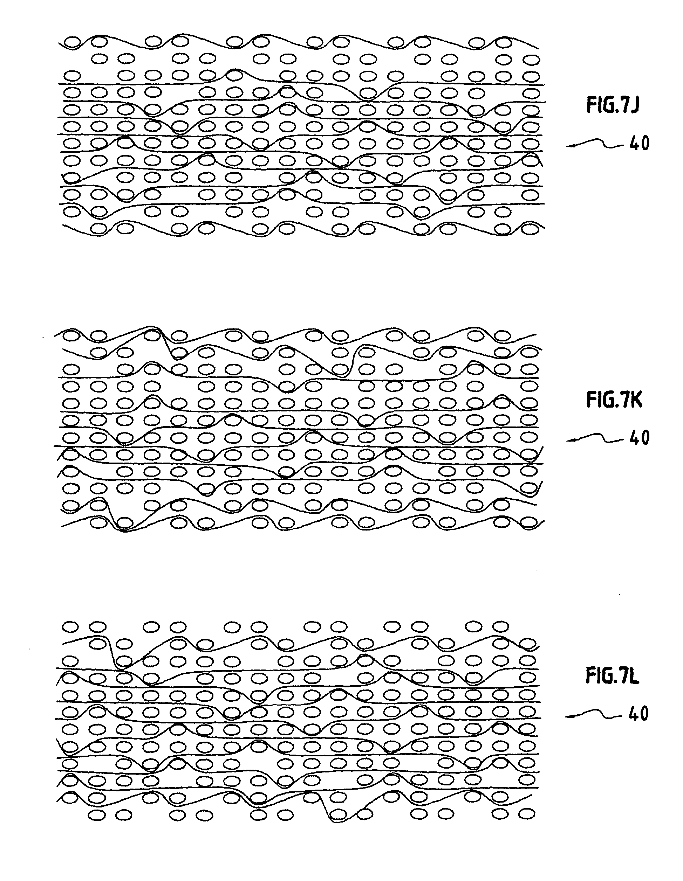

Les figures 7A à 7L représentent des plans d'armure successifs d'une structure 40 obtenue par tissage 3D multicouches comprenant 12 couches de fils de trame U1 à U12. Le tableau ci-dessous résume les armures et contextures du tissage 3D utilisé, la variation d'armure de la structure 40 étant symétrique par rapport à un plan médian avec ses peaux 44, 46 situées de part et d'autre du coeur 42. On note que les fils de trame ne sont pas disposés en quinconce, mais certaines couches de trame ont un nombre de fils de trame différent de celui d'autres couches de trame (variation de contexture en trame).

| **Couches de fils de trame** | **Armure tissage multicouche** | **Contexture** |
|---|---|---|
| U1 | Toile | 6,6/6,6 |
| U2 | Multi-toile | 6,6/6,6 |
| U3 | Multi-satin de 5 | 8/8 |
| U4 | Multi-satin de 5 | 8/8 |
| U5 | Multi-satin de 6 | 10/10 |
| U6 | Multi-satin de 6 | 10/10 |
| U7 | Multi-satin de 6 | 10/10 |
| U8 | Multi-satin de 6 | 10/10 |
| U9 | Multi-satin de 5 | 8/8 |
| U10 | Multi-satin de 5 | 8/8 |
| U11 | Multi-toile | 6,6/6,6 |
| U12 | Toile | 6,6/6,6 |

Comme le montrent les figures, le tissage multi-satin est réalisé de en prenant alternativement un fil de trame d'une première couche et un fil de trame d'une deuxième couche adjacente à la première.

Dans la partie de coeur 42 (correspondant aux trames U3 à U10), les fils utilisés en chaîne et en trame sont des fils formés de fibres discontinues en carbone maintenues par un fil de guipage fugitif. Dans les parties de peau 44, 46 (trames U1, U2, et U11, U12, les fils sont formés de filaments continus en carbone, à savoir les fils des trames U1, U2, U11, U12 et les fils de chaîne des tissages toile et multi-toile.

Ainsi, dans cet exemple, le type de fil, l'armure du tissage 3D multicouches et la contexture varient entre coeur 42 et peaux 44, 46. On notera que la variation d'armure et de contexture est d'une certaine façon progressive en adoptant un satin de 5 pour les trames U3, U4 et U9, U10, entre le satin de 6 des couches U5 à U8 et la toile des peaux, ceci afin d'éviter une discontinuité trop franche entre coeur et peau.

Une armure multi-satin à coeur se traduit par un moindre embuvage et une meilleure tenue mécanique parallèlement aux couches de trame, notamment en sens chaîne, en comparaison avec une armure interlock.

Dans le cas d'une densification par CVI, une armure toile en peau offre un accès plus aisé aux gaz à travers la peau, en comparaison avec une armure de type satin.

On pourrait toutefois, en variante, utiliser une armure de type sergé pour le tissage des peaux.

Les structures fibreuses telles qu'obtenues par le procédé selon l'invention conviennent pour la réalisation de pièces en matériau composite obtenues par densification des structures fibreuses par CVI, notamment des pièces en matériau composite thermostructural ayant un renfort fibreux en fibres de carbone et une matrice en carbone et/ou en céramique.

## Revendications

1. Structure fibreuse de renfort de pièce en matériau composite, la structure fibreuse étant tissée en une seule pièce et ayant une partie interne, ou coeur, réalisé par tissage tridimensionnel et une partie adjacente à une surface extérieure, ou peau, **caractérisée en ce que** le coeur est réalisé avec des fils au moins majoritairement formés de fibres discontinues et la peau est réalisée par tissage avec des fils formés de filaments continus.

2. Structure selon la revendication 1, dans laquelle le coeur est réalisé par tissage tridimensionnel de type interlock et la peau est réalisée par tissage avec armure de type toile, satin ou sergé.

3. Structure selon la revendication 2, dans laquelle le tissage de la peau comprend un tissage bidimensionnel avec armure toile, satin ou sergé et le tissage interlock à coeur s'étend jusqu'à la peau.

4. Structure selon la revendication 2, dans laquelle le tissage de la peau comprend un tissage tridimensionnel multicouches avec armure de type toile, satin ou sergé.

5. Structure fibreuse selon la revendication 1, dans laquelle le coeur et la peau sont réalisés par tissage multicouches avec des armures différentes.

6. Structure fibreuse selon la revendication 5, dans laquelle le coeur est réalisé par tissage multicouches avec armure de type satin et la peau est réalisée par tissage tridimensionnel avec armure de type toile ou sergé.

7. Structure selon l'une quelconque des revendications 1 à 6, dans laquelle la peau est réalisée avec une contexture plus faible que celle avec laquelle le coeur est réalisé.

8. Structure selon l'une quelconque des revendications 1 à 7, dans laquelle des parties différentes de la structure fibreuse sont formées avec des fils de natures chimiques différentes.

9. Structure selon l'une quelconque des revendications 1 à 8, dans laquelle le tissage de la partie de coeur est réalisé avec des fils qui sont formés de fibres discontinues sensiblement sans torsion et d'au moins un fil de guipage fugitif assurant la cohésion des fils.

10. Pièce en matériau composite comprenant une structure fibreuse de renfort selon l'une quelconque des revendications 1 à 9 densifiée par une matrice obtenue au moins partiellement par infiltration chimique en phase gazeuse.

## Claims

1. A fiber texture for reinforcing a composite material part, the fiber texture being woven as a single part and having an inner portion, or core, made by three-dimensional weaving and a portion adjacent to an outside surface, or skin, **characterized in that** the core is made with yarns that are made up, at least in the majority, from discontinuous fibers, and the skin is made by weaving with yarns made up from continuous filaments.

2. A texture according to claim 1, wherein the core is made by three-dimensional weaving of the interlock type and the skin is made by weaving with a plain, satin, or twill type weave.

3. A texture according to claim 2, wherein the weaving of the skin comprises two-dimensional weaving with a plain, satin, or twill type weave and the interlock weaving of the core extends as far as the skin.

4. A texture according to claim 2, wherein the weaving of the skin comprises multi-layer three-dimensional weaving with a plain, satin, or twill type weave.

5. A fiber texture according to claim 1, wherein the core and the skin are made by multi-layer weaving with different weaves.

6. A fiber texture according to claim 5, wherein the core is made by multi-layer weaving with a satin type weave and the skin is made by three-dimensional weaving with a plain or twill type weave.

7. A texture according to any one of claims 1 to 6, wherein the skin is made with a lower-count structure than that with which the core is made.

8. A texture according to any one of claims 1 to 7, wherein the various portions of the fiber texture are made with yarns of different chemical natures.

9. A texture according to any one of claims 1 to 8, wherein the weaving of the core portion is performed with yarns each made up from substantially twist-free discontinuous fibers together with at least one sacrificial covering yarn providing cohesion for the yarn.

10. A composite material part comprising a fiber reinforcing texture according to any one of claims 1 to 9, densified by a matrix obtained at least in part by chemical vapor infiltration.

## Patentansprüche

1. Faserverstärkungsstruktur eines Teils aus Verbundwerkstoff, wobei die Faserstruktur in einem Stück gewebt ist und einen Innenteil, oder Kern, der durch dreidimensionales Weben hergestellt ist, sowie einen einer Außenseite benachbarten Teil, oder Haut umfaßt, **dadurch gekennzeichnet, daß** der Kern mit Fäden hergestellt ist, die wenigstens mehrheitlich von Stapelfasern gebildet sind, und die Haut durch Weben mit von Endlosfasern gebildeten Fäden hergestellt ist.

2. Struktur nach Anspruch 1, wobei der Kern durch dreidimensionales Weben vom Typ Interlock und die Haut durch Weben mit einer Bindung vom Typ Leinwand-, Satin- oder Körperbindung hergestellt ist.

3. Struktur nach Anspruch 2, wobei das Weben der Haut ein zweidimensionales Weben mit Leinwand-, Satin- oder Köperbindung umfaßt und das Kern-Interlockgewebe sich bis zur Haut erstreckt.

4. Struktur nach Anspruch 2, wobei das Weben der Haut ein dreidimensionales mehrlagiges Weben mit einer Bindung vom Typ Leinwand-, Satin- oder Köperbindung umfaßt.

5. Faserstruktur nach Anspruch 1, wobei der Kern und die Haut durch mehrlagiges Weben mit unterschiedlichen Bindungen hergestellt sind.

6. Faserstruktur nach Anspruch 5, wobei der Kern durch mehrlagiges Weben mit einer Bindung vom Typ Satinbindung und die Haut durch dreidimensionales Weben mit einer Bindung vom Typ Leinwand- oder Köperbindung hergestellt ist.

7. Struktur nach einem der Ansprüche 1 bis 6, wobei die Haut mit einer Fadendichte ausgebildet ist, die geringer als die des Kerns ist.

8. Struktur nach einem der Ansprüche 1 bis 7, wobei unterschiedliche Teile der Faserstruktur mit Fäden unterschiedlicher chemischer Arten gebildet sind.

9. Struktur nach einem der Ansprüche 1 bis 8, wobei das Gewebe des Kernteils mit Fäden hergestellt ist, die von im wesentlichen torsionsfreien Stapelfasern und von wenigstens einem den Zusammenhalt der Fäden sicherstellenden flüchtigen Umspinnungsfaden gebildet sind.

10. Teil aus Verbundwerkstoff, das eine Faserverstärkungsstruktur nach einem der Ansprüche 1 bis 9 umfaßt, die durch eine Matrix verdichtet ist, welche wenigstens teilweise durch chemische Gasphaseninfiltration erhalten wird.
